# EUROPEAN PATENT APPLICATION

(11) **EP 2 701 447 A1**
(43) Date of publication of application: **26.02.2014**
(21) Application number: 12005991.0
(22) Date of filing: 22.08.2012
(51) Int. Cl.: H04W 76/02, H04W 84/12

(54) **A method for establishing a wireless network by means of a content identifier**

(71) Applicant: Rheinisch-Westfälisch-Technische Hochschule Aachen, 52056 Aachen (DE)
(72) Inventor: Wirtz, Hanno, 5062 Aachen (DE); Wehrle, Klaus, 52074 Aachen (DE)
(74) Representative: Müller-Boré & Partner Patentanwälte PartG mbB

(57) **Abstract**

Computer-implemented method for establishing a wireless network by means of a content identifier, the method comprising: receiving, by at least one access device, a request message including the content identifier; checking whether the content identifier is included in a look-up table, the look-up table comprising a list of content identifiers; if the content identifier is included in the look-up table: creating a network with a network identifier derived from the content identifier; creating a response message including the network identifier; sending the response message including the network identifier to a client device; and associating the client device to the network identified by the network identifier.

## Description

### Field of the invention

The present application relates to providing direct, network-independent wireless search between wireless devices, such as a plurality of client devices and a plurality of access devices. In particular, the present application relates to a computer-implemented method for establishing a wireless network by means of a content identifier, a method for finding content in a wireless network by means of a content identifier, a client device, an access device, a system and a computer program product.

### Background

Wireless communication, e.g. wireless communication according to the 802.11 network standard, as implemented in a vast and rising number of mobile devices, is inherently pervasive due to the broadcast nature of the wireless medium. The capabilities of mobile devices in terms of storage, computation and communication further render them as viable producers and providers of content, i.e. data items, services and/or unidirectional communication.

Current communication protocols and approaches for searching of content can be divided in two separate classes, network-based approaches and network-less approaches. Network-based approaches require a membership of a searching device (e.g. a client device) and an offering device (e.g. a provider or an access device) in a shared network. The type of the network depends on the scenario. Network-based approaches may comprise a network infrastructure, e.g. access points, which may be used to provide wireless communication in companies, public locations, or universities independent from the network of the underlying network infrastructure, e.g. a local area network (LAN) or a direct subscriber line (DSL) network. Network-less approaches may comprise mobile networks between mobile device which do not require a network infrastructure. For example, typical scenarios in a city and/or on a campus show a high proliferation of wireless communication devices such as smartphones, laptops and/or netbooks. Wireless 802.11 networks between these devices may allow for a spontaneous exchange of content and/or provision of services without the need for infrastructure-based services. For searching for content on mobile wireless devices (e.g. client devices and/or access devices), a client device may associate and/or connect to each of a plurality of wireless communication devices (e.g. client device and/or access devices) prior to carrying out the search. In any scenario, the shared network takes the role of a communication mediator which ensures that participating devices, e.g. client devices and/or the access devices, can communicate with each other. Traditional approaches of the wired communication domain use broadcasts to identify each device in the network. Approaches for mobile networks offer forwarding and transferring of search requests and the corresponding content after association of the client device to the access device. Both types, the traditional approach using broadcast messages and the approaches for mobile networks, use a dedicated protocol which is supported by the network and/or can be performed on the network. Network-less approaches may signal available services, reachable devices and/or properties of an existing network without connecting the searching device to the network. For example, 802.11 management frames may be used to signal available services and/or reachable devices and/or properties of the network.

To establish a network between the requesting client device and the target device (e.g. the access device and/or another client device), the 802.11 standard defines two mechanisms, an ad-hoc mode and an infrastructure mode. While network creation in the 802.11 ad-hoc mode is usually not supported by most current smartphones, access point (AP) functionality for infrastructure mode networks is a built-in commodity in current mobile devices. For the infrastructure mode, a client device has to associate to a network first and, second, may query devices (e.g. client devices and/or access devices) in the network for the desired content, services and/or communication partners by e.g. using service discovery protocols such as Service Location Protocol (SLP), Universal Plug and Play (UPnP), and/or Simple Service Discovery Protocol (SSDP).

In semantic 802.11 wireless networking, standard 802.11 frames are overloaded with network and/or service information. The network or service information is transferred in e.g. 802.11 management frames to support network selection, location-based advertisements and wirelessly transmitted coupons. For example, access points that implement the 802.11u standard may provide details such as the network type, whether they provide Internet access and possible implemented security mechanisms. Mobile devices may then choose a network based on these details instead of the network identifier. In these provider-driven approaches, access points proactively signal semantic information to nearby client devices via pre-established permanent networks.

Thus, according to an aspect, it is a problem to improve the search for content in a wireless network.

The problem is solved according to the independent claims. Preferred embodiments are defined in the dependent claims.

### Method according to an aspect

According to an aspect, a method for establishing a wireless network by means of a content identifier is provided. As an example, the content identifier may comprises a search string, a query (e.g. an SQL or XML query), a unified resource identifier (URI), a unified resource locator (URL), a file name, a link, or any other identifier being able to identify content in a network environment. Establishing a network may comprise configuring the network so that a client device is able to send messages to other devices, e.g. an access device or another client device, in the network and receive messages from other devices, e.g. an access device or another client device, in the network. The wireless network may comprise a wireless local area (WLAN) network or a Wi-Fi network.

According to the present invention, the method comprises receiving, by at least one access device, a request message including the content identifier. The request message may comprise a broadcast message, a probe request frame, or any other management frame of the 802.11 network standard or any other network standard. The request message may further comprise one or more data fields which are able to include data of the content identifier and have a restricted size.

The method further comprises checking whether the content identifier is included in a look-up table, the look-up table comprising a list of content identifiers. The look-up table may comprise or be a database table and/or an index table and/or a hash table. The look-up table may be stored in a database, a file or in main memory. Further, the list of content identifiers may be pre-computed. Pre-computed may mean that the list of content identifiers is automatically created from content, e.g. extracting the file name of a file, extracting meta data from multimedia content, and/or applying an encoding function and/or logical operation. Optionally or alternatively, the list of content identifiers may be created manually by e.g. a user specifying the content identifier. Checking whether the content identifier is in the look up table may comprise comparing the content identifier received from the client device with the content identifiers, in particular all content identifiers, included in the look-up table.

If the content identifier is included in the look-up table, the method further comprises:
- creating a network with a network identifier derived from the content identifier;
- creating a response message including the network identifier;
- sending the response message including the network identifier to a client device;
- associating the client device to the network identified by the network identifier.

Creating a network with a network identifier derived from the content identifier may comprise creating the network with a network identifier which is equal to the content identifier. Creating the network with the network identifier may comprise creating a wireless network. Creating may include automatically configuring the wireless network. The network may be a virtual network and/or a physical network. The network identifier may comprise a Service Set Identifier (SSID) and/or a medium access control (MAC) address. The network identifier may identify a service, a set of services of the network, and/or a virtual or physical network segment. The network identifier may identify the content specified by the content identifier. The network identifier may be a temporary network identifier. The network identified by the network identifier may be a temporary network including services required for retrieving the content specified by the content identifier. Deriving the network identifier from the content identifier may include applying an encoding function and/or a logical operation to the content identifier.

Creating a response message may include creating a probe response frame of the 802.11 network standard. Preferably, the network identifier may be included in the SSID field of the probe response frame.

Sending the response message including the network identifier to a client device may include broadcasting the response message to at least one or all client devices in the transmission area of the access device.

Associating the client to the network identified by the network identifier may include receiving an association request message from the client device and/or registering the client device to the network identified by the network identifier. Optionally, associating the client device to the network may include sending an association response message to the client device to signal confirmation or failure of the association. Associating the client device to the network may be performed according to the IEEE 802.11 network standard. After associating the client device to the network, the access device may be configured to forward messages and/or frames including the content indentified by the content identifier to the client device.

Advantageously, the method may enable a pervasive search of arbitrary content identified by the content identifier with the support of one or more communication protocols of the wireless network. By establishing a wireless network by means of the content identifier on demand, the previously unknown and not countable number of communication partners, e.g. access device(s) and/or client device(s), may be limited to the access device(s) which are able to offer the content identified by the content identifier. With the creation of the network identified by the network identifier derived from the content identifier, a platform for distributing the content identified by the content identifier is created on demand, i.e. on the fly and without prior preparation of the association of the client device. In other words, an on demand network is established. Further, the search for content may be carried out without requiring the establishment of an association to a network. Only if the content is available on the access device, then the client device may be associated to the network. This approach may reduce the effort of establishing associations, e.g. 802.11 associations, by preventing the association of client devices to networks which are not able to provide the content to the client device. In particular, a dedicated 802.11 network may be established on demand only for the dedicated content retrieval specified by the content identifier. The access point gains full control over one or more of the following: the data transmission related to the requested content, the lifetime of the connection and/or association, and the access and/or the services available to the client device for transmission the requested content in the created network.

The access device may be able to selectively provide content identified by the content identifier to the client device. For example, access to files like multimedia files or documents, services, gateway or streaming functionality, and/or communication between users of devices may be performed via a network of the access device created on demand. The access device may improve the access to content offered by the access device by creating the network depending on the content identifier. Advantageously, it is not longer necessary to provider general and/or unspecified access to content for client devices any more by creating the network according to the content identified by the content identifier. The search approach may be further independent from central and/or Internet-based search engines. In addition, all client device(s) and/or access device(s) within the transmission range may be searched for content without associating to each client device and/or access device by using the response and request messages including the content identifier for identifying the access point which may provide the content identified by the content identifier. This enables a large number of wireless devices independent of the network to be directly searched for content. Thereby, the search might not require an Internet connection and/or an association of the wireless devices. Further, the content may be exchanged directly between the wireless devices, e.g. a client device and/or an access device.

Further, parallel search for content provided by access devices may be enabled within the whole range of reachable, wireless communication devices, e.g. access devices due to the broadcast nature of the wireless medium. In addition, any delay for the finding content on access devices is reduced, since a time-consuming association of a client device to the access device is only required when the content is provided by the access device.

### Further embodiments of the method

In an embodiment, the method further comprises:
wherein the content identifier is an encoded content identifier; and
wherein the list of content identifiers comprises a list of encoded content identifiers.

The encoded content identifier may comprise encoding a content identifier with an encoding function E. The encoding function E may comprise a hash function, and/or a text compression function, and/or a truncating function, and/or an index function. The encoding function may be used to shorten the content identifier to a given number of characters, e.g. 32 characters, and/or a given number of bytes, e.g. 32 bytes. The given number of characters and/or the given number of bytes may be determined by the length of the data field, e.g. the SSID field, of the request and/or response messages in which the content identifier are included. Optionally or alternatively, further data fields, e.g. information elements of the 802.11 management frames, of the request and/or response messages, e.g. probe request frame and/or probe response frame, may be used to embed the content identifier. Optionally or alternatively, customised response and/or request messages may be used to embed the content identifier. Further, the data field to embed the content identifier may be further divided into a prefix field and/or a field for flags, and/or a field for the hash value if a hash function for encoding the content identifier may be used. For example, if the content identifier comprises a URL having 50 characters, the encoding function, e.g. a hash function may reduce the size of the URL to e.g. 32 characters. The list of content identifiers may also comprise a list of encoded content identifiers. Preferably, the list of encoded content identifiers uses the same encoding function to enable a comparison of the encoded content identifier received with the request message with the list of encoded content identifiers in the look-up table.

Advantageously, the encoding function may be used reduce the length of the content identifier to provide an encoded content identifier. By using the encoded content identifier, a consistent addressing scheme for content may be applied. Both client devices and access devices use the same function to encode the content identifiers which improves search results, since typographical errors and/or different wording may be removed when encoding the content identifiers. By reducing the length of the content identifiers to fit the size of the message field in which the content identifier is exchanged, complex searches for content, users and services may be possible. For example, if the content identifier specifies a user, a service, and/or content, a simultaneous search for content of the specified service of the particular user may be performed.

The method may further comprise:
if the content identifier is not included in the look-up table:
   - ignoring the request message from the client device.

Accordingly, if the content identifier is not included in the look-up table, the request message from the client device is ignored. Ignoring the request message may comprise stopping the processing of the request message. The ignoring of the request message may further comprise that the access device does not respond to the request message from the client.

Advantageously, bandwidth required for responding to the request message from the client device may be saved. Further, the client device may be prevented from associating to the access device, since no network is created. In particular, no network identified by the network identifier derived from the content identifier is created.

In an embodiment, one or more of the following applies:
wherein the at least one access device comprises a wireless access point using the 802.11 network standard;
wherein the request message comprises a probe request frame of the 802.11 network standard;
wherein the response message comprises a probe response frame of the 802.11 network standard;
wherein the encoded content identifier is included in the Service Set Identifier (SSID) field of the respective probe response and probe request frames of the 802.11 network standard;
wherein the client device is a mobile wireless device using the 802.11 network standard; and
wherein the request message is sent from the client device to a plurality of access devices and, in particular, to all access devices within the wireless range of the client device.

The client and access devices and the messages exchanged between the client and access devices may use the 802.11 network standard. In particular, the access device may comprise a wireless access point and/or a mobile wireless device providing the functionality of the wireless access point, and the client device may comprise a mobile wireless device. The request and response messages may be implemented using a probe request frame and/or a probe response frame of the 802.11 network standard. The content identifier may be embedded in the SSID field of the probe request and response frames. The request and/or the response messages may be sent to all client devices and/or access devices within the wireless range of the respective client and/or access devices. In other words, the request and response message may be broadcast messages between the client devices and the access devices.

Advantageously, establishing a wireless network by means of content identifier may be provided and/or implemented in the 802.11 wireless standard. In some cases, modifications to the protocol and/or the network stack of the 802.11 wireless standard are required. It may be that only the 802.11 management frames, e.g. the probe request frame and the probe response frame, are needed to establish a network with a network identifier derived from the content identifier.

In an embodiment, the method may further comprise:
requesting, by the access device, the content identifier from a server device;
sending the content from the server device via the access device to the client device;
disabling, when the content is sent, the network between the client device and the access device.

The method may further comprise requesting, by the access device, the content identifier from a server device. Requesting the content identifier from the server device may comprise creating and sending a request message derived from the content identifier to the server device and forwarding content of the server device to the client device. The access device and the server device may be one single device having the functionality of both the access device and the server device, or two devices separate from each other and connected via a network to each other. For example, the access device may send an HTTP message to the server device to forward the content identifier, e.g. a URL, to the server device. The server device may respond by transferring the content identified by the content identifier to the access device, the access device then forwards the content to the client device.

The content from the server device may be sent via the access device to the client device. The server device may comprise a cache server, a proxy, a web server, a file server, an application server, a peer-to-peer program, or any other server device able to provide content to the client device. The communication between the server device and the client device may comprise unidirectional and/or bidirectional communication. The communication may be between the server device and the client device via the access device.

The method may further comprise disabling, after the content is sent, the network between the client device and the access device. Optionally, the access device and/or the client device may confirm, by a confirmation message, the successful sending of the content prior to disabling the network. Disabling the network may comprise sending a disconnect message to the client device by the access device. Disabling the network may comprise destroying the network such that the network cannot be re-associated, i.e. the client device cannot be re-associated to the access device without a further finding of the content. Optionally or alternatively, if the content is not successfully sent, the network may be enabled again or re-associated to continue the sending of the content without requiring a further finding of the content identified by the content identifier.

Advantageously, the security of wireless content search is improved since the network is disabled after sending the content identified by the content identifier to the client device. No further communication of the client device with the access device or the server device is performed.

In an embodiment, the method may further comprise:
wherein the look-up table comprises, for each content identifier in the list of content identifiers in the lookup table, the output of successive applications of a cryptographic hash function Eⁱ to the content identifier, and
wherein i is a natural number indicating the number of successive applications of the cryptographic hash function.

The hash function may be a pre-image resistant hash function, e.g. a cryptographic hash function. The number of successive applications of the cryptographic hash function may be a natural number, e.g. 3, or an odd natural number, e.g. 7, 5, or 3. If the number of successive applications of the cryptographic hash function is 3, the look-up table may comprise, for each content identifier, the results of E¹(<content_identifier>), E²(E¹(<content_identifier>)), and/or E³(E²(E¹(<content_identifier>))). In other words, the cryptographic hash function is recursively applied to the content identifier as specified by the natural number. Further, the output of the cryptographic hash function Eⁱ with the largest natural number i, e.g. E³, may be used when receiving the content identifier from the client device. The output of the cryptographic hash function E³ may comprise an encoded content identifier from which the network identifier may be derived.

Advantageously, applying the cryptographic hash function may enable network access control and network traffic encryption. Further, applying the cryptographic hash function may enable obfuscation of the content identifier.

In an embodiment, the method may further comprise:
setting the output of the cryptographic hash function E¹ as a network key,
authenticating the client device using the network key,
establishing a secure communication channel between the client device and the access device,
wherein the network key is optionally a WPA2 network key.

The output of the cryptographic hash function E¹ may be used as the network key. Optionally, the network key is a WPA2 network key. The network key may be used to authenticate the client device and automatically establish a secure communication channel between the client device and the access device. Establishing the secure communication channel may include associating the client device to the access device.

Advantageously, cryptographic keys, e.g. a WPA2 key, may be automatically determined by the exchange of the encoded content identifier. Therefore, an automated securing of the network traffic and the network access may be achieved. The content of the search may be hidden without previous exchange of network keys between the client device and the access device.

In an embodiment, the method may further comprise:
if an output of the cryptographic hash function Eⁱ is included in the look-up table:
   - creating a cryptographic puzzle;
   - combining the cryptographic puzzle with the output of the cryptographic hash function Eⁱ⁻¹ using an XOR operation to provide a first result;
   - sending a response message including the first result to the client device;
   - receiving a request message including a second result from the client device;
   - combining the output of the cryptographic hash function Eⁱ⁻¹ with the second result using an XOR operation to receive the solution of the cryptographic puzzle;
   - checking whether the solution of the cryptographic puzzle is correct;
   - creating, if the solution of the cryptographic puzzle is correct, a network with a network identifier derived from the second result;
   - sending a response message to the client device including the second result.

Accordingly, the access device may receive the output of the cryptographic hash function Eⁱ as the encoded content identifier in the request message from the client device. If the encoded content identifier, e.g. the output of the cryptographic hash function Eⁱ, from the client device is included in the look-up table, a cryptographic puzzle is created. The cryptographic puzzle may include a cryptogram that consists of a short piece, e.g. about 20 characters, of encrypted text. The cipher used to encrypt the text may be scaled along the length of the cipher and is simple so that the cryptogram can be solved by the client device in certain time frame, e.g. about 2 seconds on a client device with average computational power. Approaches for creating and solving cryptographic puzzles can be found in the research work of Ari Juels and John Brainard with the title "Client Puzzles: A Cryptographic Countermeasure Against Connection Depletion Attacks", RSA Laboratories, Bedford, MA. Other approaches for creating and solving cryptographic puzzles are also possible.

Preferably, the output of the cryptographic hash function Eⁱ⁻¹ is used to exchange the cryptographic puzzle and the solution of the cryptographic puzzle between the client device and the access device. For exchanging the cryptographic puzzle and the solution of the cryptographic puzzle, the output of the cryptographic hash function Eⁱ⁻¹ may be combined with the cryptographic puzzle and the solution of the cryptographic puzzle by using an XOR operation. The combination of the output of the cryptographic hash function Eⁱ⁻¹ and the solution of the cryptographic puzzle may be used to create a network identified by the network identifier derived from this combination. The network identifier may be included in a response message and sent to the client device. It may be understood that the client is authenticated and associated to the created network with the network identifier based on the combination of the output of the cryptographic hash function E² and the solution of the cryptographic puzzle.

Advantageously, the access device may create cryptographic/client puzzles of variable complexity. If the complexity of the cryptographic puzzle is increased, the client device may require more time to solve the cryptographic puzzle and the network for the client device may be created at a later point in time. Using the cryptographic puzzle, the access device may defend against denial-of-service attacks from client devices by dynamically varying the complexity of the cryptographic puzzles. It may be understood that the cryptographic puzzles are only created if the access point is able to provide the content requested by the encoded content identifier included in the request message. Any other requests may be ignored by the access point. Advantageously, computational power of creating the client puzzle and bandwidth for sending a response message is saved at the access device. This approach further increases the efficiency of establishing the wireless network by means of an encoded content identifier.

### Method according to another aspect

According to another aspect, a computer-implemented method for finding content in a wireless network by means of a content identifier is provided. The method may comprise:
sending, by a client device, a request message including the content identifier;
if the content identifier is included in a look-up table of an access device:
   - receiving a response message including a network identifier from the access device;
   - sending an association request to the access device for association to the network identified by the network identifier.

The client device may send a request message including the content identifier to at least one access device. The content identifier may be automatically created on the client device by e.g. an application running on the client device or manually input by a user via a user interface of the client device. The content identifier may comprise a user, and/or a service, and/or content. The content identifier may identify a single content item, e.g. a user or a file. The content identifier may identify a plurality of content items and/or a combination of user, and/or service, and/or content items. The combination of user, and/or service, and/or content may enable a simultaneous search for items of different categories, e.g. users, services, and/or content. The client device may send the request message on demand, i.e. without requiring the client device to be authenticated or associated to the access device. Sending the request message may be implemented using the probe request frame of the 802.11 network standard. The content identifier may be embedded into the SSID field of the probe request frame.

If the content identifier is included in the look-up table of the access device, the client may receive a response message including a network identifier derived from the content identifier. The network identifier may equal the content identifier. Next, the client device may send an association request to the access device for association to the network with the received network identifier.

Advantageously, the request message from the client device may trigger the access device to signal available users, service, and/or content specified by the content identifier. Since the access device will only respond when the content identified by the content identifier is available, consecutive associations to networks that do not serve the content identified by the content identifier may be avoided. The client device may receive a dedicated network dynamically provisioned/created by the access device. In some cases, no modifications of the network stack and/or network protocol are required on the client device. Furthermore, by leveraging the wireless broadcast medium, efficient pervasive service and/or peer discovery may be achieved without the overhead of iterating through existing networks or running a traditional service discovery protocol. Therefore, finding content provided by the access device without a dedicated search protocol may be achieved. By embedding the search process in a 802.11 association process, full compatibility with all 802.11 wireless devices may be ensured.

### Further embodiments of the method

In an embodiment, the method may further comprise encoding the content identifier using an encoding function as previously described. Optionally, encoding the content identifier may further comprise sanitising the content identifier. Sanitising the content identifier may replace misspelled words of the content identifier and/or characters of the content identifier to reduce errors and/or to arrive at the semantic equivalent content identifier before applying the encoding function.

In an embodiment, the method may comprise one or more of the following encoding functions:
- a hash function, in particular a cryptographic hash function,
- a truncating function,
- a text compression function and
- an index function.

Advantageously, a unique and efficient addressing scheme for content by means of content identifiers is achieved by using at least of one of the encoding functions.

In an embodiment, the method may optionally further comprise:
if the output of the cryptographic hash function E³ is included in the look-up table of the access device:
   - receiving a response message from the access device including the first result;
   - combining the output of the cryptographic hash function E² with the received first result using an XOR operation to receive the cryptographic puzzle;
   - solving the cryptographic puzzle to provide a solution of the cryptographic puzzle;
   - combining the solved cryptographic puzzle with the output of the cryptographic hash function E² using an XOR operation to provide a second result;
   - sending a request message to the access device including the second result;
   - receiving a response message from the access device including the second result.

Optionally, the network identifier may equal to the second result.

Accordingly, the client device may solve the cryptographic puzzle from the access device before receiving the network identifier to initiate the association to the network identified by the network identifier. Thereby, misuse of the access device bay malicious devices sending a large number of request messages to the one or more access devices may be avoided.

### Client device according to an aspect

According to another aspect, one or more client devices, such as mobile wireless devices, for finding content in a wireless network by means of an encoded content identifier may be provided. The client device may carry out the method as described above.

### Access device according to an aspect

According to another aspect, one or more access devices, such as mobile wireless devices and/or access point devices, for establishing a wireless network by means of a content identifier may be provided. The access devices may carry out the method as described above.

### System according to an aspect

According to another aspect, a system for establishing a wireless network by means of an encoded content identifier is provided. The system comprises at least one client device as described above and at least one access device as described above. The client device and the access device may communicate over a wireless network to carry out the method as described above.

### Computer program product according to an aspect

According the yet another aspect, a computer program product, stored on a computer-readable storage medium or provided as a data stream is provided. The computer readable storage medium may comprise computer readable instructions, wherein the instructions when executed by a computer urge the computer to perform operations according to the claimed subject-matter, particularly according to the method described herein.

One or more features of one or more aspects and/or embodiments can be isolated from each other and can be combined to create further aspects and/or embodiments.

### Brief description of the Figures

**Fig. 1** schematically illustrates in-network content discovery in mobile or access point based networks.
**Fig. 2** schematically illustrates an 802.11 association.
**Fig. 3** shows a content-centric on-demand wireless discovery and provision.
**Fig. 4** presents security features derived from successively applying a hash function to the content identifier.
**Fig. 5** schematically illustrates secure network provision and request confidentiality.
**Fig. 6** schematically illustrates a provider-side denial-of-service (DoS) protection using client-side cryptographic puzzles.
**Fig. 7** shows the overhead for multiple hash operations to encode the content table and to establish WPA2 network keys, puzzle material and 802.11 network SSIDs.
**Fig. 8** shows an exemplary system for implementing the claimed subject matter.

### Detailed Description

In the following text, a detailed description of examples will be given with reference to the drawings. It should be understood that various modifications to the examples may be made. In particular, elements of one example may be combined and used in other examples to form new examples.

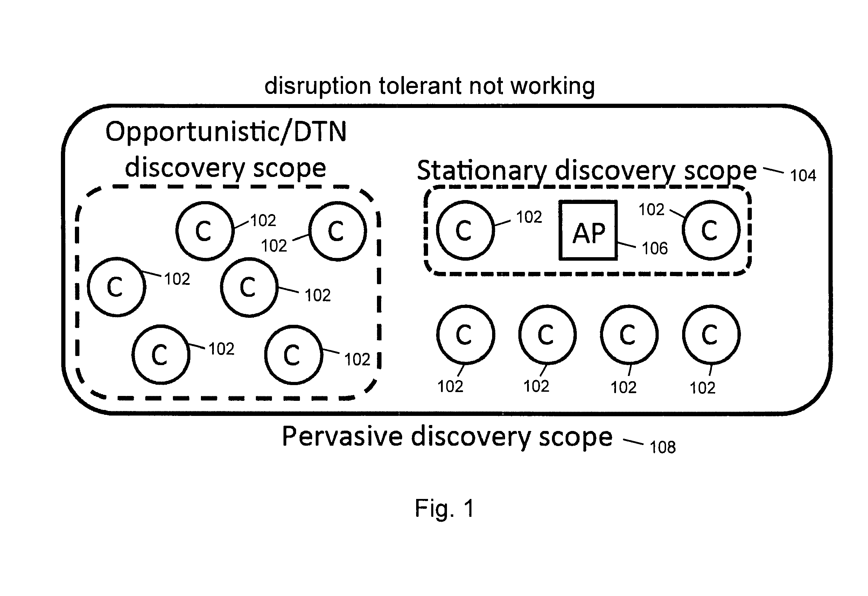

**Fig. 1** schematically illustrates in-network content discovery in mobile or access point based networks, e.g. wireless local area network (WLAN) and/or mobile wireless networks supporting Wi-Fi, which are restricted by the boundaries of disjunct networks in contrast to pervasive discovery which envisions full coverage of all reachable devices. An opportunistic or delay-tolerant network (DTN) discovery scope 100 may restrict the discovery scope to one or more client devices 102, e.g. mobile client devices, within a delay-tolerant network. A DTN network may comprise a network in which devices, e.g. the client devices 102, may connect and/or associate to each other in an unpredictable and/or disruptive manner. The association between the devices of the DTN network might not be frequently performed and might be spontaneously carried out. In some cases, only content provided by the client devices 102 within the DTN discovery scope 100 is discovered. A stationary discovery scope 104 may restrict the discovery to an access device 106, e.g. an access point, and the client devices 102 within the discovery scope of the access device 106 and/or the client devices 102 associated to the access device 106. Only content provided by the access device 106 and/or the client devices 102 of the stationary discovery scope 104 is discovered. The scope of in-network discovery may be restricted to each disjunct network, e.g. the network of the DTN discovery scope 100 or the network of discovery scope 104, excluding the client devices 102, e.g. devices such as mobile or stationary wireless devices, in other networks as well as unassociated client devices as illustrated in Fig. 1.

Unassociated client devices may comprise client devices 102 outside of the discovery scope of the in-network discovery scopes of both, the DTN discovery scope 100 and the stationary discovery scope 104. In-network discovery further requires client devices 102 to iteratively execute an appropriate discovery protocol in all currently available networks to ensure coverage of all the potential access devices 106 providing the content. Given the dense proliferation of wireless devices and networks, this entails significant time and communication overhead. Using pervasive discovery scope 108, the client devices 102 and the access devices 106 in the wireless range may be within the pervasive discovery scope. The pervasive discovery scope 108 may include the client devices 102 and/or the access devices 106 of the DTN discovery scope 100, the stationary discovery scope 104 and client devices 102 excluded from both the DTN discovery scope 100 and the stationary discovery scope 104. The pervasive discovery scope 108 may enable discovery outside of existing networks to:
i. directly query all devices, e.g. client devices 102 and/or access devices 106 in the communication range, ensuring high coverage,
ii. enable instant discovery to exploit the available opportunities despite constrained contact times, and
iii. avoid the impracticality and overhead of network and protocol operation.

For achieving the pervasive discovery scope 108, secure and pervasive wireless content discovery outside of the context of an established mobile and/or stationary network is required. The client device 102 may broadcast content requests embedded in standard 802.11 frames and access devices 106 only subsequently establish correspondent 802.11 networks on-demand to serve a request. Thus, the secure and wireless content discovery may widen the scope of discovery from single networks to the wireless broadcast medium, achieving instant queries of all devices, e.g. the client devices (102) and/or the access devices (106), in the communication range of the respective devices. Further, the secure and wireless content discovery may shift the security aspects of the discovery process from a trusted network to the open, observable wireless medium. The secure and wireless content discovery may provide content request and provision confidentiality, denial-of-service (DoS) defense mechanisms and user authentication to protect sensible content. Specifically, the secure and wireless content discovery may provide the following advantages:
- **Content-centric wireless networking:** The secure and wireless content discovery may embed content requests, e.g. content identifier(s) included in request messages, in probe request frames and provider responses, e.g. response messages of access devices, in probe response frames of a broadcast-based 802.11 association process. Modifying an 802.11 access point (AP) functionality to establish wireless networks only in response to a request may then enable content-centric wireless networking and may provide a transmission platform between a requester, e.g. client device 102, and a provider, e.g. the access device 106. The secure and wireless content discovery may further use an encoding function (e.g. a hash function) -based addressing scheme to consistently address arbitrary content while adhering to the space constraints of 802.11 frames.
- **Secure content discovery and provision:** The secure and wireless content discovery may provide request and provision confidentiality through the pre-image resistance of the employed hashing-based addressing scheme. The secure and wireless content discovery may provide user authentication for differentiated access control and may provide a mechanism to derive per-request WPA2 keys without out-of-band communication or key exchange mechanism to secure network access and provide traffic encryption. To protect providers, e.g. the access devices 106, from denial-of-service (DoS) attacks the secure and wireless content discovery may employ scalable client puzzles, e.g. cryptographic puzzles.

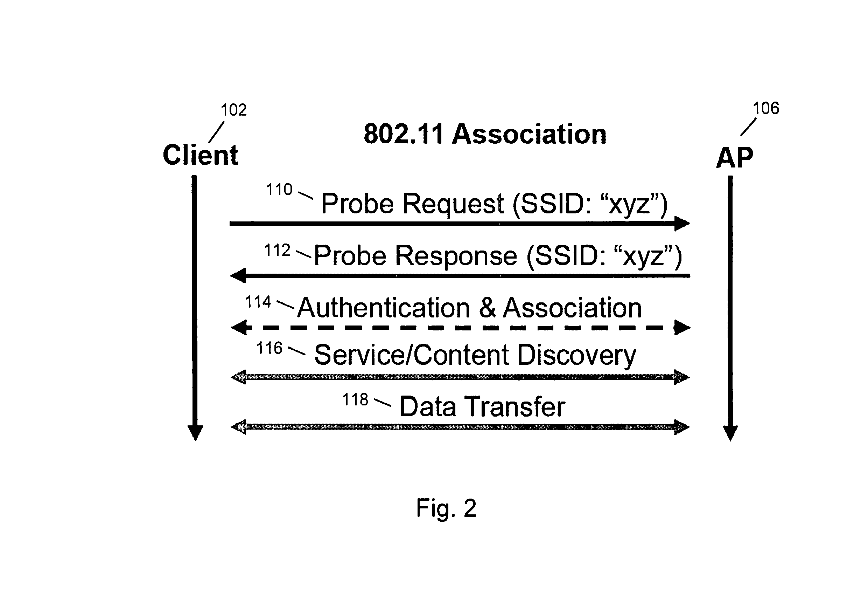

**Fig. 2** schematically illustrates an 802.11 association where the client device 102 may choose a network and may associate to the network before discovering whether the associated network may serve the request. In particular, the client device 102 may send a request message 110, e.g. a probe request frame (PREQ), to the access device 106, e.g. an access point (AP). The request message (110) of the client device 102 may include a network identifier, e.g. a Service Set Identifier (SSID). In some cases, the network identifier identifies a set of services of the access device 106. The access device 106 may respond with a response message 112, e.g. a probe response frame (PRES). The response message of the access device may include the network identifier, e.g. the Service Set Identifier (SSID).

Next, authentication and association 114 of the client devices 102 to the access device 106 may be carried out. The authentication may support an open system authentication or shared key authentication. The open system authentication may include sending an authentication request message from the client devices 102 to the access device 106. The authentication request message may include the network identifier. This may be followed by an authentication response message from the access device 106 including a success or failure message. With the shared key authentication, a shared key or pass phrase may be manually set on both the client device 102 and the access device 106. Manually setting the shared key may comprise setting the shared key by a user when configuring the client devices 102 and/or the access device 106.

The shared key authentication may include Wired Equivalent Privacy (WEP), Wi-Fi Protected Access (WPA), and/or Wi-Fi Protected Access 2 (WPA2). Once the authentication is complete, the client devices 102 may associate or register with the access device 106 to gain access to the network which is identified by the network identifier. For association, the client devices 102 may send an association request to the access device 106. The access device 106 processes the association request. If the access device grants the association request, the access device 106 may send a response message. The client device 102 may transfer 118 data to the access device 106 and/or receive data from the access device 106. If the access device 106 does not grant the association request, the process ends.

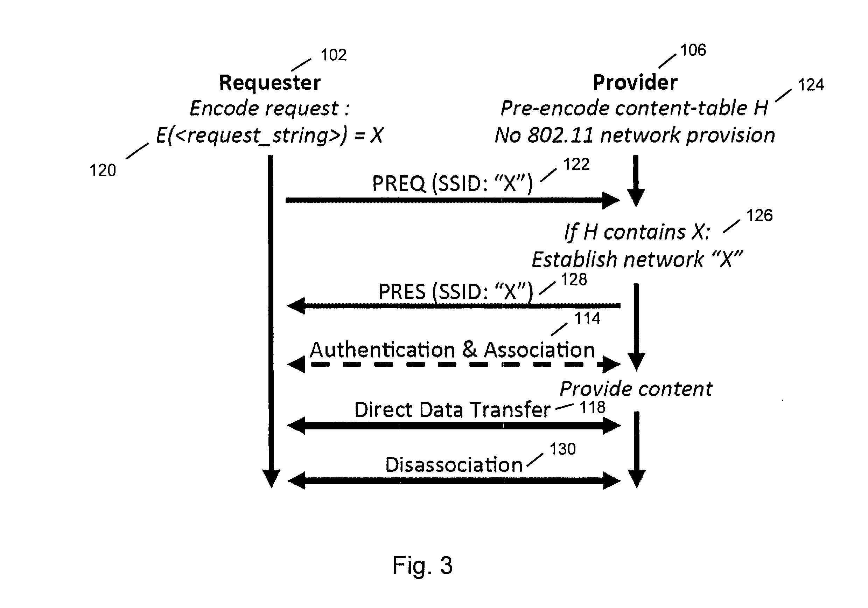

**Fig. 3** shows a content-centric on-demand wireless discovery and provision according to an embodiment of the invention where requests (e.g. content identifiers) are encoded in fields (e.g. SSID fields) of request messages (e.g. the probe request frames) using an encoding function E(), and where provider (e.g. the access devices 106) pre-compute a lookup table H, e.g. an index table and/or a hash table, of the content they provide, compare observed requests (e.g. the content identifiers received from the client devices) against the look-up table H, and establish a network specifically for this request (e.g. the specified content identifier).

To enable pervasive and instant content discovery, all devices (e.g. the client devices 102 providing access device functionality and/or the access devices 106) may be directly queried in a communication range for specific content and to enable these devices to provide the requested content. The secure and wireless content discovery may build on a query mechanism that may integrate into existing association processes (e.g. the 802.11 association process), and triggers the provision of a network (e.g. a 802.11 network) on demand specifically per request and per requesting device (e.g. client device 102). To uniformly address content in the discovery and provision process, the secure and wireless content discovery may use a consistent addressing scheme shared between the client device 102 and the access device 106.

### Content-centric On-demand 802.11 Wi-Fi

Without a central entity, content discovery may entail querying all available client devices 102 to find the provider (e.g. the access device 106) of the requested content (e.g. content specified by the content identifier). In existing approaches, each query may be thereby limited to the scope of the underlying network. To overcome this limitation, the secure and wireless content discovery may enable content discovery using the wireless broadcast medium outside of the context of a network association. The secure and wireless content discovery may achieve instant and full coverage of the surrounding devices, e.g. the client devices 102 and/or the access devices 106, and may avoid the overhead of establishing and associating to the respective number of networks. The query-provision character of content discovery may be embedded into the request-response sequence of the ubiquitously supported 802.11 association process, ensuring real world applicability. In the original association process as previously described with respect to Fig. 2, each client device 102 queries the wireless environment for available networks via 802.11 probe request frames (PREQ). The probe request frames either include a specific network identifier (SSID) and/or indicate a general search by sending an empty (wildcard) SSID. The access devices 106 providing a network may respond to a matching or wildcard PREQ with a probe response frame (PRES) carrying the necessary information for each client device 102 to authenticate and associate to this network. The secure and wireless content discovery may map content discovery to this process by encoding content requests into the SSID field of the probe request frames. Consequently, content provision may map to announcing and providing an 802.11 network in response to a request, i.e. matching the indicated SSID.

In particular, the secure and wireless content discovery preferably comprises the following request and provision functionality as well as the following transmission of content functionality:
- **Creating a request:** In the secure and wireless content discovery, one or more client devices 102 may request specific content by sending a request message, e.g. PREQ, for a specific SSID. To this end, a user-space application encodes 120 the content request into the SSID field using an encoding function E, e.g. E(<content_identifier>) = X. The application then may start the native 802.11 association process, i.e. may trigger the request message, e.g. PREQ, for a network with the encoded SSID 122.
- **Provision of the network:** Using the encoding function E() 120, the access devices 106 may establish a look-up table H 124 that holds the encoded values of all content items the access device 106 wants to provide. The look-up table H 120 can be pre-computed by the access devices 106 and does not need to be computed for every request. The access device 106 then determines whether it is to respond to a query by looking up the encoded request X in H. To respond to a request, the secure and wireless content search may extend the 802.11 access point functionality with the ability to establish a network with a given SSID, e.g. X, upon receipt of the request message and a positive check for X in H 126. Resuming the standard 802.11 association process, the establishment of network X may trigger a response message with (encoded) content identifier X 128. Receipt of the response message then may trigger the 802.11 authentication and association process 114 at the client device 102.
- **Transmission of the content 118:** Upon completion of the association process 114, the requesting client device 102 and the access device 106 are located in a common network. In this network, actual content transmission occurs with regard to the content type, e.g. via download of a data item from an HTTP server or traffic forwarding to the Internet as a service. As both the provider 106 and the requester 102 are aware of the content type, the requesting device 102 may initially launch the respective application, e.g., a web browser, while the provider 106 prepares the corresponding application 118.
- **Disassociation from the network 130:** Upon completion of the transmission of the requested content, the provider (106) may disassociate the client device from the network. Disassociating from the network may comprise sending a disconnect message to the client device.

The process described above can be done individually to each client of a plurality of clients requesting content.

### Content Encoding

The query-response mechanism in the secure and wireless content discovery depends on a mechanism to address content consistently across distinct devices. In some cases, the secure and wireless content discovery does not build on an existing network infrastructure and higher layer protocols (e.g. HTTP and/or DTN Bundle protocol) that may allow complex container structures (e.g. XML or ASF) to identify content. Instead, the embedding of content requests in the SSID field of Probe Request frames may entail a size constraint of 32 bytes and printable characters in Ascii85 encoding. To meet these limitations, the secure and wireless content discovery may use content identifiers as input for a cryptographic hash function, e.g. SHA-1, to derive unique content identifier of limited length. The application may subsequently transform the hash value via an Ascii85 encoder to meet the requirement of printable characters in the SSID field. While content identifiers may occur in very diverse and complex formats, file and service names may be used as well as ISO/OSI layer 2 device addresses, e.g. MAC addresses, and/or public keys of users.

To remove ambiguities in names, the secure and wireless content discovery may sanitize input values by aligning ambiguous characters, e.g., "-" and "." with a predefined character, e.g. "_". For example, if a user that searches for a specific person and/or content item and/or service encodes the search string (e.g. the item's name or the person's name or public key) by first sanitizing the input string and then hashing the value to the corresponding key. Input sanitizing serves to ensure that, for example, "minutes_mobicom", "minutes mobicom" and "minutes-mobicom" are encoded to the same key. Hashing serves to reduce the size of the input string and to provide a consistent encoding scheme at the client and the AP. For example, the user searching for the presentation minutes would thus encode the input string "presentation_minutes" to the key "X". To query the devices in the vicinity for the request, the client then actively sends a probe request for a network with the SSID "X". Hash-based encoding may lend itself to content encoding in the secure and wireless content discovery as hash functions may naturally adhere to space constraints with typical functions producing e.g. 20 bytes of output for arbitrary input values. Also, the abstract character of hash values may obfuscate the actual request with pre-image resistance hindering reverse calculation of observed requests and the spreading of output values preventing linking of requests.

### On-demand wireless network establishment

To allow for client-driven networking, the AP functionality of the access devices 106 may be modified. In contrast to the conventional provision of pre-configured, fixed networks in terms of their SSID, the access devices 106 might not permanently provide a network. Instead, the access device 106 may monitor the incoming probe request frames and check the request encoded in the SSID against the look-up table H that holds the encoded content identifiers of the content that the access device 106 may want to provide. Construction of the look-up table H follows the same encoding scheme as on the client side to derive identical keys for matching search strings. This is a one-time effort similar to generating and maintaining a content database and/or an index structure and may be done as a background process of the access device 106. In case the request, i.e. the content identifier, is listed in the look-up table H, the access device 106 establishes an 802.11 infrastructure mode network on-demand for this request. To implement the functionality as described above on the access device 106, the functionality of the *hostapd* daemon may be modified, which provides access point functionality on Linux-, Android-, and OpenWrt-based devices, among others. To signal the presence of this network to the client device 102, a probe response frame is sent to the client device that triggers the original 802.11 association process at the client device. If the look-up table does not contain the content identifier, the access device ignores the probe request from the client device 102.

Since the access device 106 only provides this network in response to the specific request, the client device 102 is able to associate directly to the network that serves its request. For a number of client devices, each client device 102 may be able to associate to the network that services its request. By integrating the approach according to an embodiment of the present invention into the original 802.11 association process, compatibility with legacy devices may be gained and an additional discovery protocol is not required. The on-demand nature of the network may also free the client device from performing additional service discovery in the resulting network. Therefore, the access device 106 may serve the request based on its semantics, e.g. a file request triggers the provision of this file via an HTTP server at a predefined IP address while a user request triggers a chat and/or localization application. Once the client request is served (e.g. the requested content is transmitted), the access device tears down and/or disables the network as the network only exists for the specific client request.

### Benefits

There may be numerous benefits in the secure and wireless content discovery. First, the secure and wireless content discovery may significantly reduce communication overhead and duration of discovery to the transmission of a single message. At the same time, the broadcast character of the 802.11 association process may ensure full and instant coverage of the surrounding devices. Second, on-demand network provision may efficiently establish a rendezvous point and a transmission network between the client device 102 and the access device 106. The dedicated network may allow per-request network configuration and client and traffic handling in a controlled environment. Third, the 802.11 embedding may ensure practicality as current Wi-Fi devices implement both the underlying 802.11 client and access point (AP) functionality. In addition, requiring no network infrastructure of any kind may allow execution of the secure and wireless content discovery at any point in time as there is no overhead or coordination of network establishment or maintenance prior to content discovery.

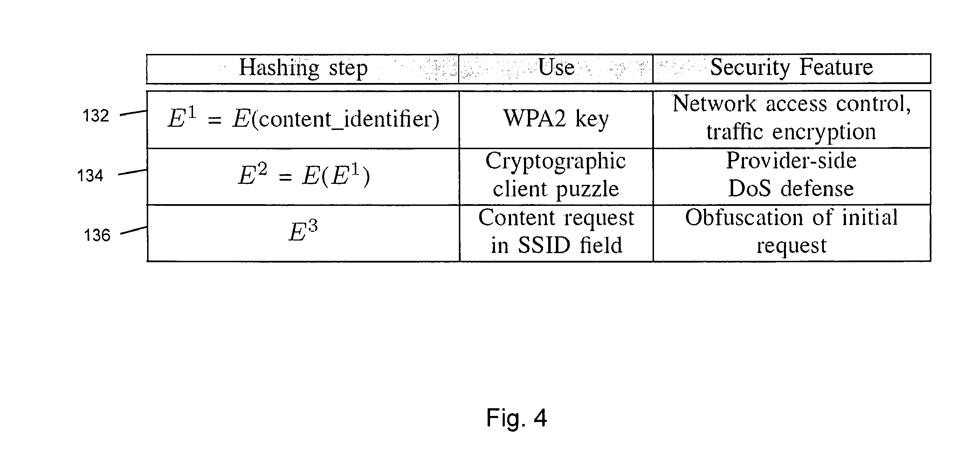

**Fig. 4** presents security features derived from successively applying a hash function E() to the content identifier. In contrast to content discovery inside an existing network, content discovery in an open wireless medium (before a network is established) lacks any notion of trust. Furthermore, the observability of the content discovery by malicious third parties and/or malicious devices prevents confidentiality of wireless transmissions indicating requests, e.g. request messages, or corresponding responses, e.g. response messages. This opens up possible misuse of the secure and wireless content discovery by malicious devices, e.g. replaying observed requests to link content to the client devices 102 and the access devices 106. The secure and wireless content discovery may enable fully pervasive content discovery by widening the scope of queries to all devices, e.g. the client devices 102 and/or the access devices 106 in the transmission range.

The secure and wireless content discovery may provide several security mechanisms to e.g. allow the access devices 106 to defend against denial-of-service (DoS) attacks via cryptographic client puzzles. The access devices 106, building on the secure and wireless content discovery, may be able to distinguish between publicly available content and content which the access devices 106 may only want to provide to trusted client devices.

To enable the aforementioned features between unknown devices, a pre-image resistant hash function E(), e.g. SHA-1, may be used to encode the content identifier. It may be understood that the output length of the pre-image resistant hash function may be configured so that the output length of the pre-image resistant hash function is equal or less than equal the size of the data flied in which the encoded content identifier may be included. In addition to deriving consistent content addressing as previously described with respect to sanitizing the content identifier, successively applying the hash function E() to content identifiers allows generation of cryptographic keys and cryptographic puzzles. As shown in Fig. 4, each application of the cryptographic hash function E() in the hashing sequence enables specific security features. Due to the pre-image resistance of the hash function, e.g. SHA-1, hash values may be transmitted without allowing malicious devices to derive previous hash values and the original content identifier from the hash values, even if the hash function is known to the malicious device.

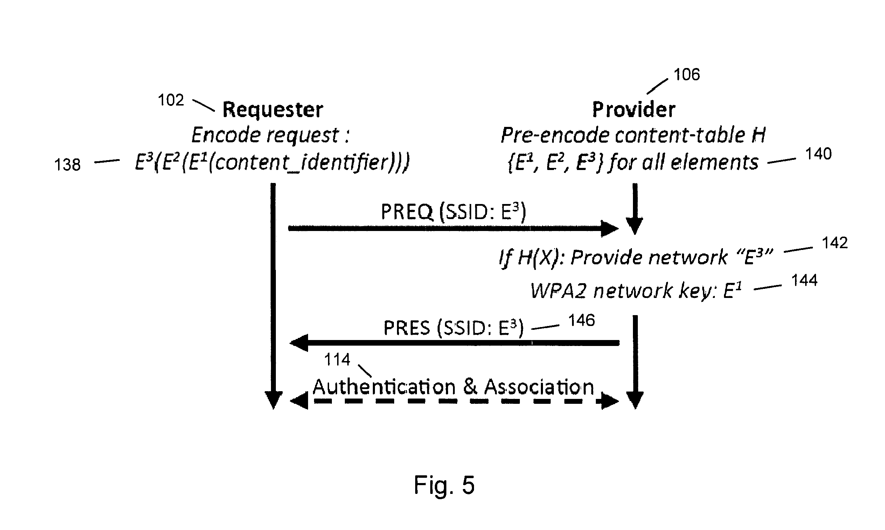

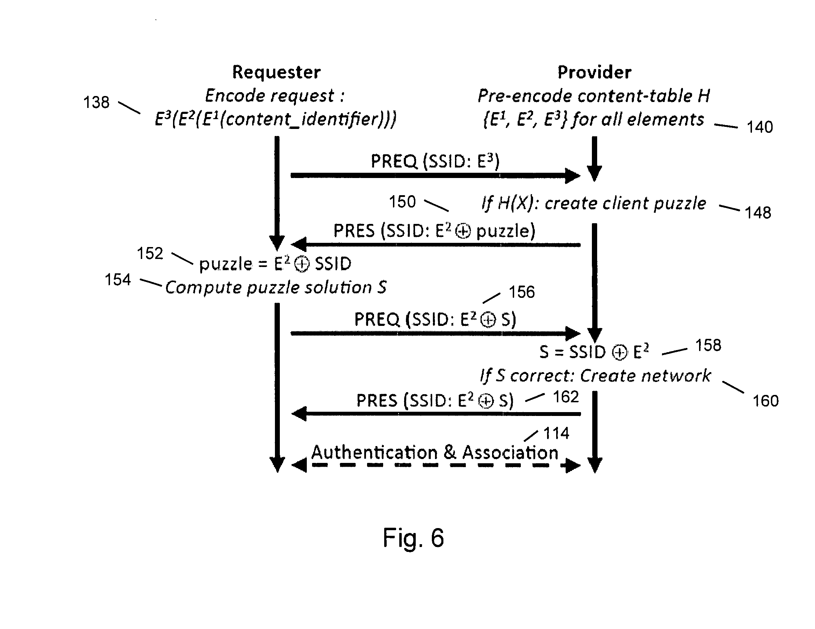

In particular, several hashing steps (i.e. applying the hash function E() successively) may be carried out to address network security, transmission confidentiality, denial-of-service protection and/or enable the authentication of users. The output of the first hashing step 132, i.e. Eⁱ⁻², in the hashing sequence may be used as network key, e.g. WPA2 key. By using the output of the first hashing step 132 as the network key, the access to the network may be restricted, since only specific client device of the client devices 102 which know the network key may authenticate to the network provided by the access devices 106. Further, the network traffic between each client device 102 and the corresponding access devices 106 may be encrypted by using the output of the first hashing step 132 as the network key (see Fig. 5 for further details). Further, the output of the second hashing step 134, i.e. Eⁱ⁻¹, in the hashing sequence, may be used for exchanging a cryptographic puzzle. The cryptographic puzzle may be used by the access devices 106 to defend against denial-of-service attacks (see Fig. 6 for further details). Furthermore, the output of the third hashing step 136, i.e. Eⁱ, in the hashing sequence may be used to provide an encoded content identifier included in a request message to the access devices 106. Thereby, the content identifier may be obfuscated (see Fig. 5 and Fig. 6 for further details).

**Fig. 5** schematically illustrates secure network provision and request confidentiality where the output of the cryptographic hash function Eⁱ⁻² and the output of the cryptographic hash function Eⁱ⁻¹ are not derivable by eavesdropping due to the pre-image resistance of the applied (cryptographic) hash function. As uninvolved devices could thus opportunistically or maliciously associate to newly established networks, the secure and wireless content discovery may provide network access control by means of a secure passphrase. Furthermore, the secure and wireless content discovery may encrypt the data traffic of the actual content transmission between the client devices 102 and the access devices 106.

As described with respect to Fig. 4, the initial content identifier may be hidden or obfuscated by successive application of the cryptographic hash function E() to the content identifier. To enable network access control and network traffic encryption, the client device 102 may apply the cryptographic hash function E() three times in sequence to encode 138 the content identifier. Independently from the client device 102, the access device 106 may also apply the cryptographic hash function three times in sequence to pre-encode 140 the content identifiers of the content which the access device may intend to provide to the client devices 102. The outputs of applying the cryptographic hash function Eⁱ⁻², Eⁱ⁻¹, and Eⁱ may be stored in the look-up table H of the access device. Eⁱ⁻² may comprise the output of applying the cryptographic hash function to the content identifier. Eⁱ⁻¹ may comprise the output of applying the cryptographic hash function to Eⁱ⁻². Eⁱ may comprise the output of applying the cryptographic hash function to Eⁱ⁻¹.

The process of secure network provision and request confidentiality may comprise the following steps:
- The client device 102 may send 141 a request message, e.g. an 802.11 probe request frame, including the output of the hash function Eⁱ, e.g. E³, as the encoded content identifier to the access devices 106.
- The access device 106 may check whether the output of the hash function Eⁱ is included in the look-up table.
- If the output of the hash function is included in the look-up table of the access device 106, the access device 106 creates/provides 142 a network with the network identifier derived from the encoded content identifier, e.g. the output of the hash function Eⁱ. The access device further determines 144 the network key, e.g. a WPA 2 key, from the output of the cryptographic has function Eⁱ⁻². In addition, the access device 106 may send 146 a response message, e.g. the probe response frame, including the output of the cryptographic hash function Eⁱ to the client device 102.
- The client device may authenticate and/or associate 114 to the access device after receiving the response message from the access device as previously described with respect to Fig. 3.

If a malicious device listens to the communication between the client device and the access device, the malicious device cannot calculate the network key, i.e. the output of the hash function Eⁱ⁻² from the output of the hash function Eⁱ being transmitted as part of the request and response messages. Even if the malicious device knows the hash function, the malicious device cannot compute the network key from the hash function Eⁱ. Therefore, only client devices 102 which know the content identifier may request the content identified by the encoded content identifier. Since the malicious device is not able to compute the network key, no access to the network is possible for the malicious device.

Fig. 6 schematically illustrates a provider-side denial-of-service (DoS) protection using a cryptographic puzzle, e.g. a client-side cryptographic puzzle. Since the network is created on demand by receiving a request message from the client devices 102, the access devices 106 require computational and/or bandwidth resources for establishing the network for each content identifier. If the number of requests for establishing the network exceeds the computational and/or bandwidth resources of the access device 106, the access device 106 may be blocked and cannot respond to further request messages. This means, a denial-of-service attack may be carried out against the access device 106, which may prevent the access device 106 from providing the secure and wireless content discovery to the client devices 102. Therefore, the secure and wireless content discovery provides possibilities to defend against denial-of-service attacks by using the cryptographic puzzle, particularly a client-side cryptographic puzzle. The client-side cryptographic puzzle may require computational resources of a client device 102 to solve the cryptographic puzzle prior to establishing the network to the access device 106. The solution of the cryptographic puzzle may be used to create the network with a network identifier derived from the solution of the puzzle and the encoded content identifier.

In particular, a defence against denial-of-service attacks using the cryptographic puzzle may comprise the following steps:
- A client device of the client devices 102 may send 141 a request message including the output of the cryptographic hash function E³.
- If the output of the cryptographic hash function E³ is included in the look-up table H of the access device 106, the access device 106 creates 148 a cryptographic puzzle.
- The cryptographic puzzle may be combined, by the access device 106, with the output of the cryptographic hash function E² using an XOR operation to provide a first result. The first result may be embedded in a response message, e.g. a probe response frame. Next, the access device 106 may send 150 the response message including the first result to the client device 102. The output of the cryptographic hash function E² may only be known to the client device 102 which initiated the content discovery and the access device 106 which provides the content identified by the encoded content identifier since the output of the cryptographic hash function E² may not be computed from the output of the cryptographic hash function E³ due to the pre-image resistance of the cryptographic hash function. Advantageously, the cryptographic puzzle cannot be read from the response message, since the extraction of the cryptographic puzzle may require the knowledge of the output of the cryptographic hash function E².
- The client device 102 may receive 150 the response message including the first result. From the first result, the client device 102 may extract 152 the puzzle by combining the output of the cryptographic hash function E² with the first result using the XOR operation and may compute 154 the puzzle solution S. Computing 154 the puzzle solution may comprise computing and/or guessing the input of a hash function by using a partially given input of the hash function. For example, 20 bits of 24 bits of the input of the hash function are given and, for computing and/or guessing the input of the hash function, 4 bits of the 24 bits of the input of the hash function may have to be computed and/or guessed by the client device 102. By varying the length of the bits, the complexity to compute the solution may be adapted, e.g. increased or decreased. The puzzle solution S may be combined with the output of the cryptographic hash function E² using the XOR operation to provide second result, e.g. E² XOR S. The second result may be embedded in a request message and may be sent 156 to the access device 106. Further, the second result, e.g. E² XOR S, may be the network identifier by means of which the access device 106 creates the network.
- The access device 106 receives the request message including the second result. Upon receipt, the access device 106 combines the second result with the output of the cryptographic hash function E² using the XOR operation to extract 158 the puzzle solution. The access device may further check 160 whether the puzzle solution S is correct. Since the access device may know the original input of the hash function, the access device may compare the input of the hash function computed by the client device with the original input used for creating the cryptographic puzzle to check whether the puzzle solution S is correct. If the puzzle solution is correct, the network with the network identifier which may equal to the second result may be created. The access device 106 may further send 162 a response message including the network identifier, e.g. the second result, to the client device 102.
- The client device 102 may receive the response message including the network identifier from the access device 106. After receiving the request message, the client device 102 may authenticate with the access device 106 and/or associate 114 to the network as previously described with respect to Fig. 3.

In order to defend against denial-of-service attacks, the access device 106 may create computationally complex cryptographic puzzles at variable complexity which varies the time required to solve the puzzle at the client side. Only if the client provides the correct solution of the cryptographic puzzle to the access device, a network identifier may be created which may include the solution of the cryptographic puzzle and may be dependent from the encoded content identifier. The access device 106 may request a proof, e.g. the solution of the client puzzle, from the client device 102. Therefore, the access device 106 may defend against denial-of-service attacks.

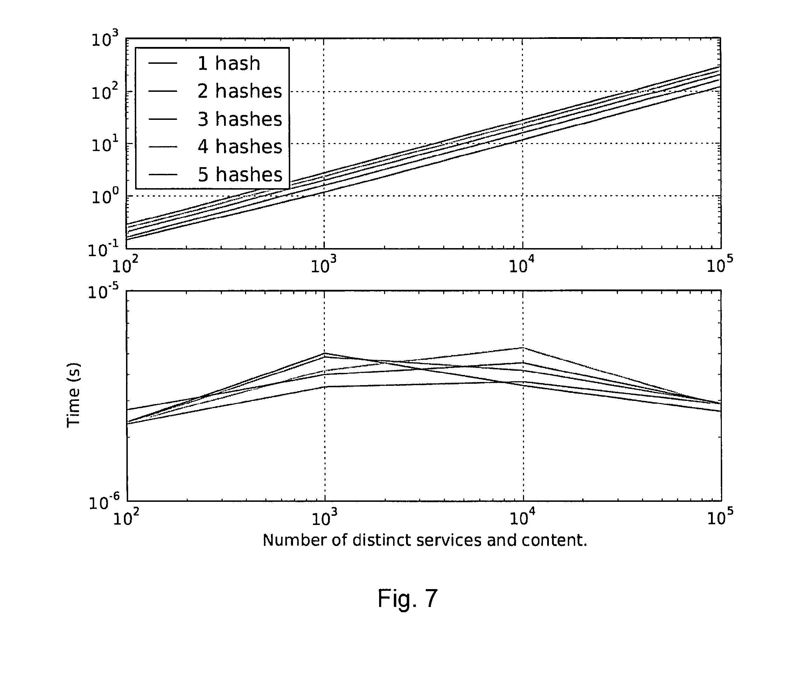

**Fig. 7** shows the overhead for multiple hash operations to encode the content table and to establish WPA2 network keys, puzzle material and 802.11 network SSIDs. The overhead for successively applying a hash function may largely depend on the requirements for applying a hash function just once. For creating further hashes by applying further hash functions, the overhead is rather low. Therefore, the overall overhead for creating multiple hashes may significantly depend on the time required for creating the first hash by applying the first hash function E¹. Therefore, using multiple hashes may be computationally efficient with low overhead.

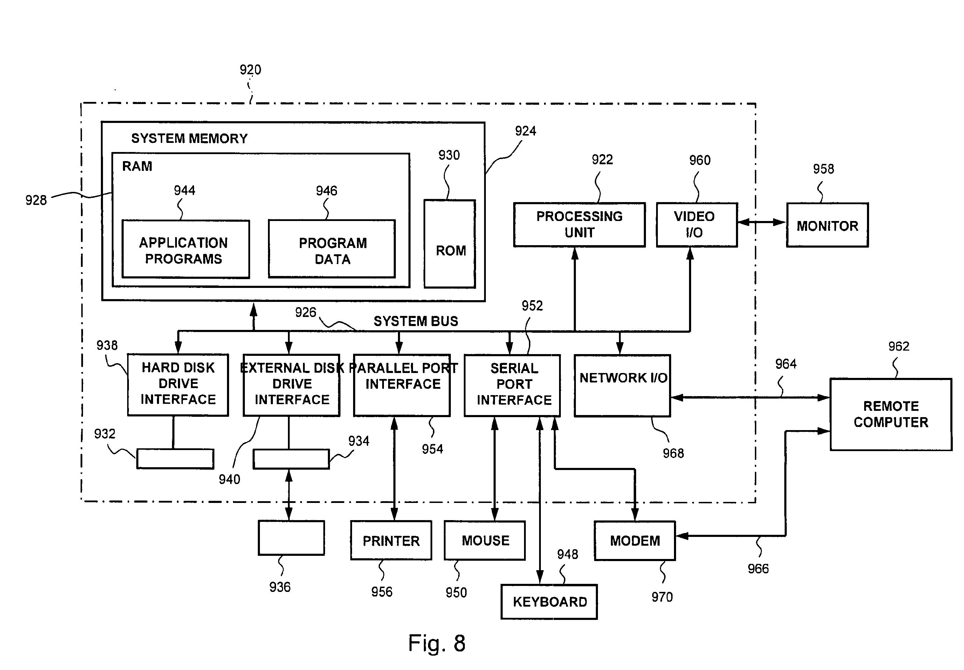

**Fig. 8** shows an exemplary system for implementing the claimed subject matter including a general purpose computing device in the form of a conventional computing environment 920 (e.g. a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and nonvolatile memory, such as a random access memory (RAM) 928 and a read only memory (ROM) 930. A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method for establishing a wireless network by means of a content identifier as described above and the method for finding content in a wireless network by means of a content identifier as described above. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in Figs. 1 to 7.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. **Figure 8** depicts the computer environment networked with remote computer 962. The remote computer 962 may be another computing environment such as a server, a router, a network PC, a peer device or other common network node, and may include many or all of the elements described above relative to the computing environment 920. The logical connections depicted in **Figure 8** include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore other data relevant to the secure and wireless content discovery (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the method for establishing a wireless network by means of a content identifier and the method for finding content in a wireless network by means of a content identifier.

### List of Reference Numerals

- 100: opportunistic/disruption-tolerant networking (DTN) discovery scope
- 102: client device
- 104: stationary discovery scope
- 106: access device
- 108: pervasive discovery scope
- 110: request message / probe request frame
- 112: response message / probe response frame
- 114: authentication and association
- 116: service/content discovery
- 118: data transfer
- 120: content identifier encoding
- 122: request message including encoded content identifier
- 124: pre-encoded content table H
- 126: establishing/creating network for content identifier
- 128: response message including encoded content identifier
- 130: disassociation
- 132: first hashing step: output of cryptographic hashing function E¹
- 134: second hashing step: output of cryptographic hashing function E²
- 136: third hashing step: output of cryptographic hashing function E³
- 138: multiple request encoding
- 140: pre-encoded content table for multiple has values
- 141: request message including the output of the cryptographic hash function E³
- 142: create network with network identifier derived from the output of the cryptographic hash function E³
- 144: set network key derived from the output of the cryptographic hash function E¹
- 146: response message including the output of the cryptographic hash function E³
- 148: create cryptographic puzzle
- 150: response message including E² XOR cryptographic puzzle
- 152: extract cryptographic puzzle
- 154: compute puzzle solution S
- 156: request message including E² XOR S
- 158: extract puzzle solution S
- 160: create network with network identifier E² XOR S
- 162: send response message E² XOR S
- 920: conventional computing environment
- 922: processing unit
- 924: system memory
- 926: system bus
- 928: random access memory (RAM)
- 930: read only memory (ROM)
- 932: hard disk drive
- 934: external disk drive
- 936: removable disk
- 938: hard disk drive interface
- 940: external disk drive interface
- 944: one or more application programs
- 946: program data
- 948: keyboard
- 950: mouse
- 952: serial port interface
- 954: parallel port interface
- 956: printer
- 958: monitor
- 960: video input/output
- 962: remote computer
- 964: local area network (LAN)
- 966: wide area network (WAN)
- 968: network I/O
- 970: a modem

## Claims

1. Computer-implemented method for establishing a wireless network by means of a content identifier, the method comprising:
receiving, by at least one access device, a request message including the content identifier;
checking whether the content identifier is included in a look-up table, the look-up table comprising a list of content identifiers;
if the content identifier is included in the look-up table:
- creating a network with a network identifier derived from the content identifier;
- creating a response message including the network identifier;
- sending the response message including the network identifier to a client device;
- associating the client device to the network identified by the network identifier.

2. Method according to claim 1, wherein the content identifier is an encoded content identifier; and
wherein the list of content identifiers comprises a list of encoded content identifiers.

3. Method according to any one of claims 1 to 2, the method further comprising:
if the content identifier is not included in the look-up table:
- ignoring the request message from the client device.

4. Method according to any one of claims 1 to 3, wherein one or more of the following applies:
wherein the at least one access device comprises a wireless access point using the 802.11 network standard;
wherein the request message comprises a probe request frame of the 802.11 network standard;
wherein the response message comprises a probe response frame of the 802.11 network standard;
wherein the encoded content identifier is included in the Service Set Identifier (SSID) field of the respective probe response and probe request frames of the 802.11 network standard;
wherein the client device is a mobile wireless device using the 802.11 network standard; and
wherein the request message is sent from the client device to a plurality of access devices and, in particular, to all access devices within the wireless range of the client device.

5. Method according to any one of claims 1 to 4, the method further comprising:
requesting, by the access device, the content identifier from a server device;
sending the content from the server device via the access device to the client device;
disabling, when the content is sent, the network between the client device and the access device.

6. Method according to any one of claims 1 to 5, wherein the look-up table comprises, for each content identifier in the list of content identifiers in the lookup table, the output of successive applications of a cryptographic hash function Eⁱ to the content identifier, and
wherein i is a natural number indicating the number of successive applications of the cryptographic hash function.

7. Method according to claim 6, the method further comprising:
setting the output of the cryptographic hash function E¹ as a network key,
authenticating the client device using the network key,
establishing a secure communication channel between the client device and the access device,
wherein the network key is optionally a WPA2 network key.

8. Method according to any one of claims 6 to 7, the method further comprising:
if the output of the cryptographic hash function E³ is included in the look-up table:
- creating a cryptographic puzzle;
- combining the cryptographic puzzle with the output of the cryptographic hash function E² using an XOR operation to provide a first result;
- sending a response message including the first result to the client device;
- receiving a request message including a second result from the client device;
- combining the output of the cryptographic hash function E² with the second result using an XOR operation to receive the solution of the cryptographic puzzle;
- checking whether the solution of the cryptographic puzzle is correct;
- creating, if the solution of the cryptographic puzzle is correct, a network with a network identifier derived from the second result;
- sending a response message to the client device including the second result.

9. Computer-implemented method for finding content in a wireless network by means of a content identifier, the method comprising:
sending, by a client device, a request message including the content identifier;
if the content identifier is included in a look-up table of an access device:
- receiving a response message including a network identifier from the access device;
- sending an association request to the access device for association to the network identified by the network identifier.

10. Method according to claim 9, the method further comprising:
encoding the content identifier using an encoding function.

11. Method according to any one of claims 9 to 10, wherein the encoding function comprises at least one of
- a hash function, in particular a cryptographic hash function,
- a truncating function,
- a text compression function and
- an index function.

12. Client device for finding content in a wireless network by means of an encoded content identifier, the client device carrying out the method according to any one of claims 9 to 11.

13. Access device for establishing a wireless network by means of an content identifier, the access device carrying out the method according to any one of claim 1 to 8.

14. System for establishing a wireless network by means of an encoded content identifier, the system comprising at least one client device according to claim 12 and at least one access device according to claim 13, the client device and the access device communication over a wireless network to carry out the method according to any one of claim 1 to 11.

15. Computer program product stored on a computer-readable storage medium or provided as a data stream, the computer program product comprising computer readable instructions, the instructions when executed by a computer urge the computer to perform the method according to any one of claims 1 to 11.
